# EUROPEAN PATENT SPECIFICATION

(11) **EP 3 186 912 B1**
(45) Date of publication and mention of the grant of the patent: **08.04.2020**
(21) Application number: 15835085.0
(22) Date of filing: 24.08.2015
(51) Int. Cl.: H04L 29/06, H04W 76/19

(54) **METHOD AND APPARATUS FOR HANDLING PACKET LOSS IN MOBILE COMMUNICATION NETWORK**
VERFAHREN UND VORRICHTUNG ZUR HANDHABUNG VON PAKETVERLUSTEN IN EINEM MOBILKOMMUNIKATIONSNETZWERK
PROCÉDÉ ET APPAREIL DE GESTION D'UNE PERTE DE PAQUET DANS UN RÉSEAU DE COMMUNICATION MOBILE

(30) Priority: 28.08.2014 KR 20140113196
(43) Date of publication of application: 05.07.2017
(73) Proprietor: Samsung Electronics Co., Ltd., Gyeonggi-do 16677 (KR)
(72) Inventor: YOON, Taiho, Gyeonggi-do 16677 (KR)
(74) Representative: Nederlandsch Octrooibureau
(86) International application number: PCT/KR2015/008817
(87) International publication number: WO 2016/032183

(56) References cited:
- WO-A1-2013/169183
- US-A1- 2004 153 896
- US-A1- 2007 258 591
- US-A1- 2009 196 422
- US-A1- 2010 202 614
- US-A1- 2010 332 933
- US-A1- 2014 098 797
- US-A1- 2014 098 797

## Description

### Technical Field

The present disclosure relates to a method and apparatus for handling packet loss in a mobile communication network. More particularly, the present disclosure relates to a method and apparatus for treating packet loss that occurs during a voice call using long term evolution (LTE) network.

### Background Art

A mobile communication system has been developed to provide communication while retaining user's mobility. With the rapid growth of related technologies, mobile communication systems are capable of offering a high-speed data communication services as well as voice communication. Recently, long term evolution ? advanced (LTE-A) has been studied in 3rd generation partnership project (3GPP) as one of the next-generation mobile communication systems.

LTE (hereinafter used in a sense including LTE-A) is a communication standard defined for data communication only. It does not include a separate technique associated with a voice call. Instead, voice over LTE (VoLTE) allows information associated with a call to be transmitted over the Internet due to high communication rates or bandwidth. Like voice over Internet protocol (VoIP) used for internet phones or mobile messenger applications, VoLTE is a technique used to transmit or receive voice data in a compressed form over the data network. In contrast from VoIP, VoLTE adjusts a transfer rate based on network conditions and prioritizes call quality to maintain the call connection in any condition.

Generally, it is more important for the connection associated with a voice call to maintain a continuous connection rather than the overall quality of sound during the call. Typically, a connection status and a sound quality are in a tradeoff relation. In case of internet services such as web browsing, a minute disconnection and/or intermittent connection may not undesirably affect a service quality. However, a poor connection status when a voice service is implemented may directly and undesirably affect service quality. Therefore, a technique to prevent degradation of quality in a voice service is desired.

The above information is presented as background information only to assist with an understanding of the present disclosure. No determination has been made, and no assertion is made, as to whether any of the above might be applicable as prior art with regard to the present disclosure.

### Disclosure of Invention

### Technical Problem

Aspects of the present disclosure are to address at least the above-mentioned problems and/or disadvantages and to provide at least the advantages described below. Accordingly, an aspect the present disclosure is to provide a method and apparatus for maintaining a voice call in response to packet loss.

Another aspect of the present disclosure is to provide a method and apparatus for maintaining a voice call by preventing a call disconnection due to a deciphering failure caused by a bulk loss of voice packets in a voice call process over a long term evolution (LTE) network.

### Solution to Problem

In accordance with an aspect of the present disclosure, a method for handling a call in case of packet loss in a mobile communication network is provided. The method includes receiving an uplink packet from a user equipment (UE), deciphering the packet based on a first hyper frame number (HFN), changing an HFN value from the first HFN to a second HFN when a failure of the deciphering based on the first HFN occurs, and further deciphering the packet based on the second HFN.

In accordance with another aspect of the present disclosure, an apparatus of an enhanced Node B (eNB) configured to establish a call in case of packet loss in a mobile communication network is provided. The apparatus includes a transceiver unit configured to perform a communication with at least one network node, and a packet processing controller configured to: receive an uplink packet from a UE through the transceiver unit, decipher the packet based on a first HFN, change an HFN value from the first HFN to a second HFN in case of a failure of the deciphering based on the first HFN, and further decipher the packet based on the second HFN.

Other aspects, advantages, and salient features of the disclosure will become apparent to those skilled in the art from the following detailed description, which, taken in conjunction with the annexed drawings, discloses various embodiments of the present disclosure.

### Advantageous Effects of Invention

In accordance with an aspect of the present disclosure a method and apparatus for maintaining a voice call preventing a call disconnection due to a deciphering failure caused by a bulk loss of voice packets in a voice call process over a long term evolution (LTE) network is provided.

### Brief Description of Drawings

The above and other aspects, features, and advantages of certain embodiments of the present disclosure will be more apparent from the following description taken in conjunction with the accompanying drawings, in which:
FIG. 1 is a diagram illustrating the structure of long term evolution (LTE) system according to an embodiment of the present disclosure;
FIG. 2 is a diagram illustrating a radio protocol stack in LTE system according to an embodiment of the present disclosure;
FIG. 3 is a diagram illustrating a functional structure of packet data convergence protocol (PDCP) layer according to an embodiment of the present disclosure;
FIG. 4 is a diagram illustrating a ciphering method according to an embodiment of the present disclosure;
FIG. 5 is a diagram illustrating the occurrence of de-synchronization due to a change of hyper frame number (HFN) according to an embodiment of the present disclosure;
FIG. 6 is a flow diagram illustrating a method for processing an uplink packet according to an embodiment of the present disclosure;
FIG. 7 is a flow diagram illustrating a method for processing an uplink packet according to an embodiment of the present disclosure;
FIG. 8 is a block diagram illustrating an eNB according to an embodiment of the present disclosure; and
FIG. 9 is a block diagram illustrating a UE according to an embodiment of the present disclosure.

Throughout the drawings, like reference numerals will be understood to refer to like parts, components, and structures.

### Mode for the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present disclosure applies to any mobile communication system such as, e.g., a universal mobile telecommunication system (UMTS), an evolved UMTS (E-UMTS) or any other communication systems and protocols.

Embodiments of the present disclosure provide a method for maintaining a continuous call by preventing a call disconnection when packet loss occurs during a voice call process (e.g., voice over long term evolution (VoLTE)) using the LTE network. Although various embodiments of the present disclosure described hereinafter focus on VoLTE on the LTE network, this is not to be construed as a limitation of the present disclosure. In addition, the present disclosure may also be applied to Internet protocol (IP)-based traffic service (e.g., VoIP) of radio link control unacknowledged mode (RLC-UM).

In the following embodiments of the present disclosure, a case of transmitting and receiving IP traffic in RLC-UM will be described. Most operators of VoLTE service operate a voice call on the basis of RLC-UM. Namely, since VoLTE requires a real-time operation and minimal retransmission, operators typically manage VoLTE services using RLC-UM. In VoLTE, a quality of service (QoS) class identifier (QCI) may be set to one.

The RLC layer is located above the media access control (MAC) layer and supports reliable transmission of data. Also, in order to form data in a suitable size for a radio interface, the RLC layer performs segmentation and concatenation of RLC service data units (SDUs) delivered from a higher layer. The RLC layer of a receiving entity supports a reassembly function of data so as to restore the received RLC protocol data unit (RLC PDUs) to the original RLC SDUs. Each RLC entity may operate in a transparent mode (TM), an unacknowledged mode (UM), and an acknowledged mode (AM) depending on processing and transmitting scheme associated with the RLC SDU.

When operating in TM, the RLC layer delivers RLC SDU to the MAC layer without adding any header information. When operating in UM, the RLC layer forms a RLC PDU by segmentation and concatenation of RLC SDUs while attaching header information to each RLC PDU where the header information attached to each RLC PDU includes a sequence number. In UM, data retransmission and buffer storage are not supported. When operating in AM, the RLC layer forms a RLC PDU by segmentation and concatenation of RLC SDUs and may perform retransmission in response to a failure in packet transmission. For this retransmission function of AM, various parameters and variables such as a transmission window, a reception window, a timer, a counter, and the like are used. Particularly, in case of AM, several procedures and control PDUs are used to transmit data in the order of sequence numbers.

As mentioned above, in case of RLC-UM, there is no hybrid automatic repeat request (HARQ) operation on the RLC layer and there is no buffering operation on the packet data convergence protocol (PDCP) layer. Therefore, while a voice call service is used over VoLTE, VoLTE traffic is also not buffered. Because none of the traffic is buffered, VoLTE in RLC-UM has a potential problem regarding packet loss. For example, when packet loss exceeding a window size occurs during a communication over VoLTE in RLC-UM, a difference in hyper frame number (HFN) may occur between a user equipment (UE) and an evolved node B (eNB). In this case, a key value for ciphering and deciphering may be varied such that a deciphering failure may occur for uplink packets. When a deciphering failure occurs, a connection associated with a call may be disconnected. Therefore, a method for preventing an unexpected call disconnection due to packet loss is desired.

In various embodiments of the present disclosure, a deciphering failure includes an error of deciphering due to variations in masks associated with transmitting and receiving entities and also includes de-synchronization of an HFN.

A security configuration includes ciphering and deciphering and may be applied to packets delivered between a UE and an eNB.

A bulk packet loss refers to a packet loss having a size exceeding a window range regarding a PDCP sequence number (PDCP SN) size. Such a bulk packet loss may be caused by sudden variations in radio communication environments such as handover of the UE or entry into a radio shadow area.

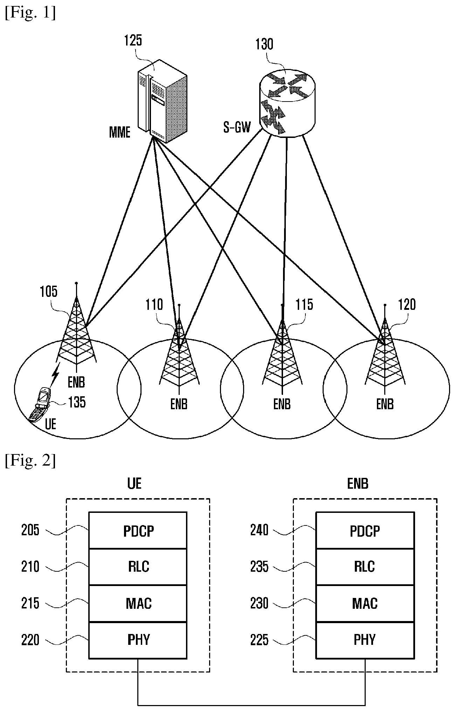

FIG. 1 is a diagram illustrating the structure of LTE system according to an embodiment of the present disclosure.

Referring to FIG. 1, a radio access network of LTE system is formed of base stations (also referred to as eNB) 105, 110, 115 and 120, a mobility management entity (MME) 125, and a serving gateway (S-GW) 130. UE 135, also referred to as a user device, a terminal, a mobile station, etc., accesses an external network through the eNBs 105-120 and the S-GW 130.

In FIG. 1, each of the eNBs 105-120 corresponds to a node B in the UMTS system. The eNB 105 is connected with the UE 135 through a radio channel and performs more complicated functions than a node B. In the LTE system, all user traffic including a real-time service such as VoIP are communicated through a shared channel. Therefore, an apparatus that performs scheduling by collecting status information such as a UE buffer status, an available transmission power status, and a channel status is required. The eNBs 105-120 perform this function.

Typically a single eNB controls a plurality of cells. In order to realize a transmission speed of, e.g., 100 Mbps, the LTE system uses a radio access technique such as orthogonal frequency division multiplexing (OFDM) at a bandwidth of, e.g., 20 MHz. Additionally, an adaptive modulation and coding (AMC) scheme is applied for determining a modulation scheme and a channel coding rate depending on a channel status of the UE 135.

The S-GW 130 is an apparatus for providing a data bearer service and also creates or removes data bearer services under the control of the MME 125. The MME 125 is an apparatus for performing a mobility management function for the UE 135 and any other control function while being connected with a plurality of eNBs.

FIG. 2 is a diagram illustrating a radio protocol stack in LTE system according to an embodiment of the present disclosure.

Referring to FIG. 2, a radio protocol stack of the LTE system includes a PDCP layer 205 and 240, an RLC layer 210 and 235, and a MAC layer 215 and 230.

Specifically, the PDCP layer 205, 240 is responsible for IP header compression and decompression, transfer of user data, maintenance of sequence numbers associated with a radio bearer, ciphering and deciphering, and the like. In an exemplary embodiment, the PDCP layer performs the ciphering or deciphering of packets transmitted over the network. In this case, among key values for ciphering or deciphering, a value varied at every packet is counted. A count may be formed of HFN and PDCP SN (i.e., count = HFN + PDCP SN). The other key values may be fixed.

The RLC layer 210, 235 is responsible for reassembly of PDCP packet data unit (PDU) in a suitable size. The MAC layer 215, 230 is connected with several RLC layer devices in one UE and performs a function to multiplex RLC PDUs to MAC PDU and demultiplex RLC PDUs from MAC PDU.

A physical (PHY) layer 220, 225 performs a function of channel-coding and modulating higher layer data and then transmitting OFDM symbol thereof to a radio channel. The PHY layer 220, 225 may also perform a function of demodulating and channel-decoding OFDM symbols received through a radio channel and then deliver the demodulated and decoded symbols to a higher layer. Also, the PHY layer 220, 225 uses HARQ for additional error correction where a receiving entity transmits one bit to a transmitting entity to notify whether a packet is received or not. This is referred to as HARQ acknowledgement/negative acknowledgement (ACK/NACK) information. Downlink HARQ ACK/NACK information regarding uplink transmission is transmitted through a PHICH (physical HARQ indicator channel), and uplink HARQ ACK/NACK information regarding downlink transmission is transmitted through physical uplink control channel (PUCCH) or physical uplink shared channel (PUSCH).

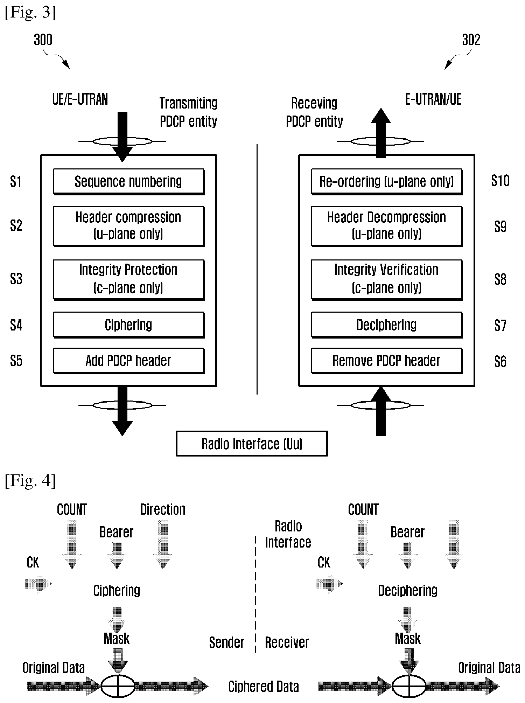

FIG. 3 is a diagram illustrating a functional structure of a PDCP layer according to an embodiment of the present disclosure.

Referring to FIG. 3, the functional structure of a PDCP layer includes a transmitting PDCP entity 300 and a receiving PDCP entity 302. In an exemplary embodiment, the functional structure of the PDCP layer associated with the transmitting PDCP entity 300 indicates specific tasks applied to PDCP SDU received from a higher entity by the PDCP layer. The functional structure of the PDCP layer associated with the receiving PDCP entity 302 indicates specific tasks applied to PDCP PDU received from a lower entity by the PDCP layer.

The PDCP layer is used for both user plane (U-plane) information and control plane (C-plane) information. Some functions of the PDCP are selectively applied depending on which plane used. For example, as shown in FIG. 3, the header compression function (S2) can be applied to U-plane data only and the integrity protection function (S3) can be applied to C-plane data only.

First, a data processing procedure that is performed at the transmitting PDCP entity is described.
S1: With regard to the received PDCP SDU, the PDCP layer allocates a sequence number to each data unit (e.g., packet).
S2: If the configured radio bearer (RB) is an RB associated with the U-plane, the PDCP layer performs the header compression task for the PDCP SDU.
S3: If the configured RB is an RB associated with the C-plane, the PDCP layer performs the integrity protection task for the PDCP SDU.
S4: With regard to the data blocks created as a result of the S2 or S3 operation, the PDCP layer performs the ciphering task.
S5: With regard to the data blocks ciphered through the S4 operation, the PDCP layer forms a PDCP PDU by adding a suitable header thereto and delivers it to the RLC layer.
   Next, a data processing procedure that is performed at the receiving PDCP entity is described.
S6: With regard to the received PDCP PDU, the PDCP layer removes the header.
S7: With regard to the header-removed PDCP PDU, the PDCP layer performs the deciphering task.
S8: If the configured RB is an RB associated with the C-plane, the PDCP layer performs the integrity verification task for the deciphered PDCP PDU.
S9: If the configured RB is an RB associated with the U-plane, the PDCP layer performs the header decompression task for the deciphered PDCP PDU.
S10: The PDCP layer delivers data blocks, i.e., PDCP SDU, received through S8 or S9 operation to a higher layer. If the configured RB is a RB associated with the U-plane, reordering may be performed prior to delivering the configured RB to a higher layer.

The header compression function used on the PDCP layer is described below. Header compression is a technique to reduce a header size based on the fact that IP headers of the IP packets of the same packet stream are not largely different from each other. In an exemplary embodiment, unvaried fields are stored in the form of context in a compressor of the transmitting entity and a decompressor of the receiving entity and varying fields are only transmitted after context is formed. This makes it possible to reduce the overhead of an IP header. In an initial operation of header compression, since the compressor transmits a full header packet in order to form the context associated with a relevant packet stream at the decompressor, there is no gain by header compression. However, after context is formed at the decompressor, the compressor only transmits a compressed header packet and thereby increasing the potential gain by header compression.

Robust header compression (ROHC), which is a header compression technique used in the LTE system, is used for reducing header information of a real-time packet such as real-time transport protocol (RTP)/user datagram protocol (UDP)/IP. Here, an RTP/ UDP/IP packet refers to a packet in which related headers are attached as the data descends from a higher layer and passes through the RTP, UDP, and IP layers. The headers include various header information required for data to be delivered to the destination via the network and restored at the receiving device. Normally an RTP/ UDP/IP packet has a header size of 40 bytes in case of IP version 4 (IPv4) and 60 bytes in case of IP version 6 (IPv6). A header compressed using ROHC may be reduced by 1-3 bytes.

FIG. 4 is a diagram illustrating a ciphering method according to an embodiment of the present disclosure.

Referring to FIG. 4, the security function performed on the PDCP layer includes two functions, i.e., ciphering and integrity protection. Both functions create various codes associated with the packets and perform ciphering or integrity test using the created codes.

A packet-dependent code is created using a PDCP SN added to each PDCP PDU. One of the code creation parameters is a count. This count has a length of 32 bits in which a least significant bit (LSB) is formed of a PDCP SN and the other most significant bit (MSB) is formed of the HFN. Since PDCP SN has different lengths, e.g., 5, 7 or 12 bits, with regard to respective RBs, the length of HFN is also varied such as 27, 25 or 20 bits. For example, in RLC UM in the 3GPP standards, the size of PDCP SN is used as 7 bits. VoLTE traffic is transmitted with RLC UM and thus the PDCP SN size of 7 bits. When the PDCP SN is 7 bits, a window range is 0-127.

A transmitting entity creates ciphered data by combining the original data with a packet-dependent code, namely a mask. This means that an XOR operation between the original data and the mask is performed for each bit. A receiving entity receives the ciphered data and deciphers the received data to generate the original data using the mask. In an exemplary embodiment, the mask may be formed of 32 bits and created from several input parameters. For example, in order to create different values for respective packets, a count is created using a PDCP SN which is varied according to the PDCP PDU. The created count is used as one of mask creation input parameters. Besides the count, the mask creation input parameters include 'bearer' which is an identifier of the RB, 'direction' which has an upward or downward value, and a 'ciphering key' (CK) which is exchanged between the UE and the network at the time the RB is established.

A ciphering error may occur at a transmitting or receiving entity. For example, a ciphering error may be caused due to variations in the mask when the HFN (which is MSB of the count) is changed. This may occur when PDCP SDUs are lost. The reason is as follows. A higher block forming the count is the SFN and a lower block is the PDCP SN. If the PDCP SN reaches the maximum value, it returns to zero, whereas HFN increases by one. For example, if the HFN is n and a PDCP SN size is 7 bits, the PDCP SN may have values from 0 to 127. Namely, when the HFN is in a state of n, the maximum value of PDCP SN is 127. Then, the HFN becomes n+1, and PDCP SN returns to 0 and increases up to 127 to perform ciphering. If any bulk packet loss beyond a window range of the PDCP SN occurs, de-synchronization may occur due to a change in the HFN.

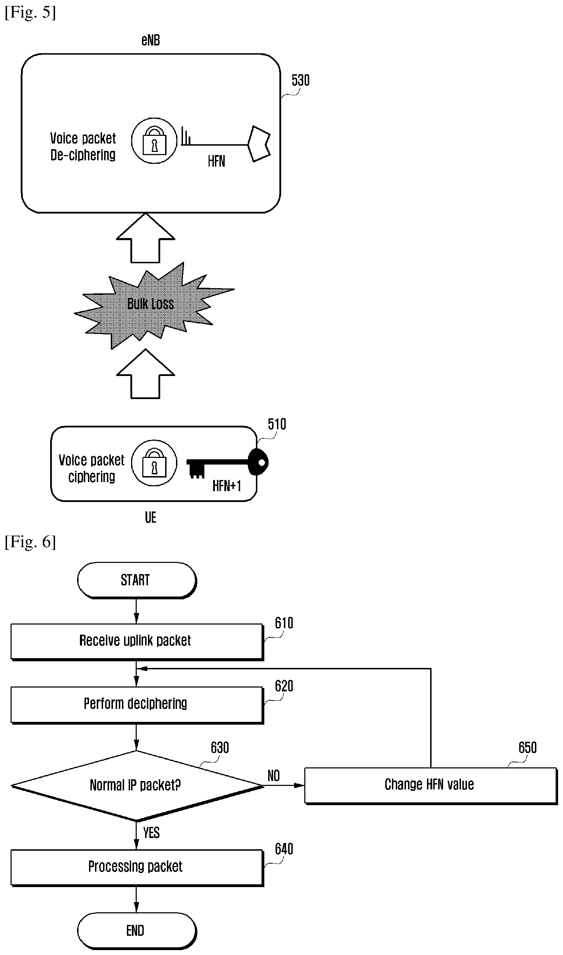

FIG. 5 is a diagram illustrating the occurrence of de-synchronization due to a change in a HFN according to an embodiment of the present disclosure.

Referring to FIG. 5, UE 510 may transmit uplink data to eNB 530. This uplink data may include VoLTE voice packets. The VoLTE voice packets transmitted on the uplink may be ciphered with a specific HFN at the UE 510 and deciphered with the same HFN at the eNB 530. Together with the PDCP SN, the HFN forms a count as discussed above.

In ciphering and deciphering of packets, a variety of keys are used. Among them, a count value is varied according to the respective packets. This count may be formed of the HFN and the PDCP SN (i.e., count = HFN + PDCP SN). The other key values may be fixed.

If a count value applied to each packet is not identical, de-synchronization occurs in a deciphering process and hence received packets cannot be deciphered. As shown in FIG. 5, when a bulk packet loss occurs between the UE 510 and the eNB 530, a count used to cipher packets at the UE 510 may be different from a count used to decipher packets at the eNB 530.

If any packet loss occurs within a window range of the PDCP SN, the eNB 530 may apply the HFN based on the SN associated with the packet. For example, if the size of the PDCP SN is 7 bits, the SN may have a value from 0 to 127. A certain packet, which follows a previous packet having a PDCP SN value of 127, has an HFN value increased by one and a PDCP SN value of zero.

If a packet loss occurs within a window range after packets are received normally, the eNB 530 may apply a HFN by comparing a PDCP SN received after the packet loss with a PDCP SN of previous packets received normally. However, if a packet loss occurs out of a window range, the eNB cannot determine, despite a comparison of a PDCP SN, whether both packets have the same HFN or not. Therefore, a deciphering failure occurs during a deciphering process and the HFN de-synchronization occurs between the UE 510 and the eNB 530.

As discussed above, the occurrence of HFN de-synchronization results in a failure in a deciphering process. In this case, a receiving entity cannot restore received data to the original data and thus discards the received data. Therefore, due to a deciphering failure, it is not possible to maintain a call and the connection associated with the call is disconnected. In the end, a voice call is released. Since this is an undesired call disconnection due to a packet loss, a method for preventing such a call disconnection is desired.

FIG. 6 is a flow diagram illustrating a method for processing an uplink packet according to an embodiment of the present disclosure.

Referring to FIG. 6, at operation 610, an eNB may receive an uplink packet from a UE. According to the 3GPP standards, VoLTE voice packets are transmitted using RLC UM and each packet is ciphered with a specific count. This specific count may be formed of a HFN and a PDCP SN.

At operation 620, the eNB performs deciphering for the uplink packet received from the UE. The eNB may decipher the received packet using a HFN configured according to synchronization with the UE. In the 3GPP standards, the uplink packet is ciphered at the UE and deciphered at the eNB by means of the same key value. If keys used for ciphering and deciphering are identical to each other, there is no problem in deciphering. However, if such keys are not identical due to a packet loss or the like (including a case such keys have different HFNs), a deciphering failure may occur.

Therefore, at operation 630, the eNB may determine whether the ciphered packet is a normal IP packet. For example, this determination may be performed based on the form of an IP packet. The result of a deciphering failure is a garbage value other than a normal IP packet form. After deciphering, the eNB performs header decompression. If a wrong mask is used for deciphering, errors continuously occur in a header decompression process. When errors occur, IP packets may be determined to be not normal.

If the receive uplink packet is a normal IP packet (namely, if the packet has a normal IP packet form), the eNB may process the received packet at operation 640 and then transmit the received packet to a higher node.

If the received uplink packet is not a normal IP packet (namely, if the packet does not have a normal IP packet form), the eNB may perform operation 650. The reason that any deciphered packet is not a normal IP packet is that de-synchronization occurs due to a mismatch of HFN values caused by a packet loss in a deciphering process. Therefore, the eNB may change an HFN value. Namely, the eNB determines that the HFN is varied due to a bulk packet loss and then changes an HFN value in a count value. The eNB may increase a current HFN value. For example, if a current HFN value is n, the eNB may increase the value to n+1.

Then, using the changed HFN value, the eNB may again perform deciphering for the received packet at operation 620. If a deciphering failure is caused by a bulk packet loss beyond a window range, deciphering with a changed HFN value may allow the received packet to be deciphered normally. Then the eNB processes the normally ciphered packet and then transmits the normally ciphered packet to a higher node.

Meanwhile, when deciphering with a changed HFN for certain packet results in normal deciphering, the eNB may perform deciphering for following packets by continuously using the changed HFN.

Typically, a call between UE and eNB may be disconnected when HFN de-synchronization occurs due to a packet loss. However, according to the above-discussed embodiment in FIG. 6, it is possible to maintain a call regardless of a packet loss (even in case of a packet loss beyond a window range).

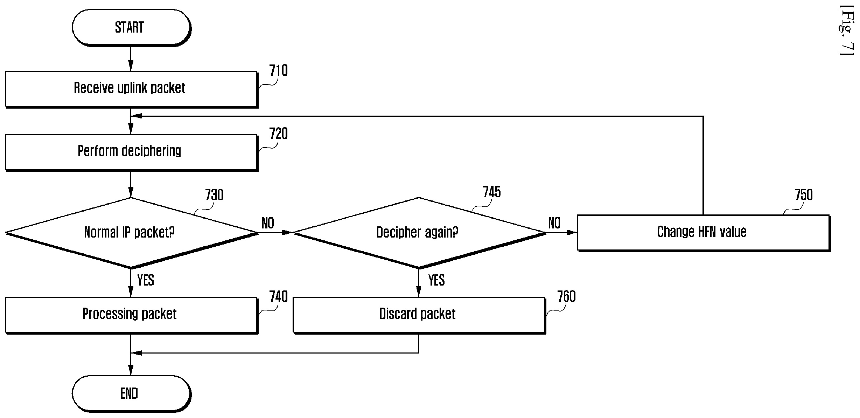

FIG. 7 is a flow diagram illustrating a method for processing an uplink packet according to an embodiment of the present disclosure.

Referring to FIG. 7, operations 745 and 760 are added to this embodiment in comparison with the previous embodiment shown in FIG. 6. According to the previous embodiment of FIG. 6, when any IP packet is determined to be not normal due to a deciphering failure, deciphering is performed again by changing an HFN value. However, when a deciphering failure occurs after a changed HFN value has been applied, another method for processing a received packet is required.

In the following description regarding FIG. 7, the same elements and operations as those in FIG. 6 will be omitted.

At operation 730, the eNB may determine whether the ciphered packet is a normal IP packet. If not a normal IP packet, the eNB may further determine at operation 745 whether the packet is a packet with a changed HFN value to decipher the packet again. Namely, the eNB may check a deciphering history through HFN so as to determine whether deciphering the packet has been previously performed.

When a packet with a changed HFN value to is to be deciphered again the eNB may discard the packet at operation 760. Namely, a packet incapable of being deciphered through both the HFN and the changed HFN is regarded as a packet incapable of applying a suitable HFN value or a damaged packet. Therefore, the eNB skips a deciphering process and discards the packet. Also, the eNB may release a call connection with the UE.

Meanwhile, the eNB and UE may set a call connection to be released when a predefined condition is satisfied. For example, the eNB may count discarded packets for a given time or with regard to the same HFN. If the number of discarded packets exceeds a predetermined value, the eNB may release a call connection with the UE.

When it is determined at operation 745 that the packet is not a packet with a changed HFN value to decipher again, the eNB may perform operation 750. Namely, as also discussed at operation 650, the eNB may change an HFN value and then decipher the packet again.

Meanwhile, at operation 745, a criterion for the number of times deciphering may be performed on a packet may be defined. For example, operation 760 may be set to be performed when the number of times deciphering is performed is two or more. In this case, if the eNB fails in deciphering with an HFN value of n, the eNB may perform deciphering a first time with a changed HFN value of n+1 and then reach at operation 745. At this time, since the number of times the packet is deciphered is under two, the eNB may change again an HFN value to n+2 at operation 750 and again perform deciphering with this changed HFN value. If a deciphering failure occurs even though applying this HFN value of n+2, the eNB may discard the packet at operation 760.

Meanwhile, in embodiments of FIGS. 6 and 7, an additional condition for changing the HFN may be further defined. This additional condition may be an HFN change trigger condition. For example, when a deciphering failure occurs for a single packet, a change of the HFN may be set not to be performed immediately and to be performed only when such an additional condition is satisfied. For example, the number of packets failing in deciphering may be accumulated. For example, based on the result of determination at operation 630 or 730, the number of packets deciphered to have an abnormal IP packet form may be accumulated. If an accumulative value satisfies a predefined additional condition, the HFN is changed.

For example, the eNB may receive an IP packet from the UE. Then the eNB removes a PDU header from the IP packet and perform deciphering using a count including a specific HFN. Also, after deciphering, the eNB may decompress a packet header. When a deciphering failure packet occurs, any error occurs due to an abnormal IP packet form in a header decompression process. The eNB may calculate the number of occurrences of a deciphering error. If this number satisfies a predefined threshold value, the eNB may change HFN.

Additionally, when packet loss exceeds a window range corresponding to the PDCP SN of packet received from the UE is detected, the eNB may change the HFN.

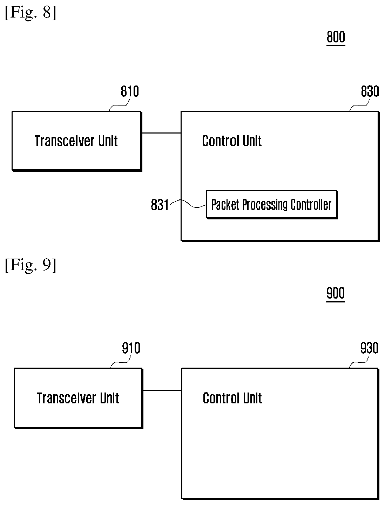

FIG. 8 is a block diagram illustrating an eNB according to an embodiment of the present disclosure.

Referring to FIG. 8, the eNB 800 may include a transceiver unit 810 and a control unit 830. The transceiver unit 810 is configured to perform a communication with at least one network node. The control unit 830 is configured to control the whole operation of the eNB 800. The control unit 830 may include a packet processing controller 831.

According to an embodiment of the present disclosure, the packet processing controller 831 may receive an uplink packet from a UE and then decipher the received packet on the basis of a first HFN. When a deciphering failure occurs based on the first HFN, the packet processing controller 831 may change an HFN value from the first HFN to a second HFN and then decipher the packet based on the second HFN. Here, if the first HFN is n, the second HFN may be n+1.

Additionally, the packet processing controller 831 may check a header of the deciphered packet. For example, if the deciphered packet fails to have the form of an IP packet, the packet processing controller 831 may determine this state as the occurrence of a deciphering failure.

Additionally, when a deciphering failure occurs, the packet processing controller 831 may determine whether there is a history of deciphering the packet with the changed HFN. If there is the history of deciphering with the changed HFN (e.g., the packet has previously been deciphered using the changed HFN), the packet processing controller 831 may discard the packet. If there is no history of deciphering with the changed HFN, the packet processing controller 831 may change the HFN value from the first HFN to the second HFN.

Additionally, the packet processing controller 831 may define an HFN change trigger condition. If the number of the deciphering failures associated with the same HFN satisfies the HFN change trigger condition, the packet processing controller 831 may change the HFN value from the first HFN to the second HFN.

The packet may be a packet associated with IP-based voice traffic in an RLC UM.

Additionally, when a packet loss that exceeds a window range corresponding to a PDCP SN of the packet is detected, the packet processing controller 831 may change the HFN value from the first HFN to the second HFN.

Although being described with reference to FIG. 8, the operation and function of the eNB 800 may further include those discussed earlier in FIGS. 1 to 7.

Also, in FIG. 8, blocks that denote elements of the eNB 800 are used for clarity and simplification. As well known in the art, any other element may be included inherently or selectively in the eNB 800. In addition, the operation of the packet processing controller 831 may be performed by the control unit 830.

FIG. 9 is a block diagram illustrating a UE according to an embodiment of the present disclosure.

Referring to FIG. 9, the UE 900 may include a transceiver unit 910 and a control unit 930. The transceiver unit 910 is configured to perform communication with at least one network node. The control unit 930 is configured to control the whole operation of the UE 900.

In an embodiment of the present disclosure, the control unit 930 may control the transceiver unit 910 to transmit an uplink packet to the eNB. At this time, a packet loss may occur. Depending on a success or failure in deciphering of the packets, a call connection between the UE and the eNB may be maintained or released.

In various embodiments of the present disclosure, the control unit 930 may control the operation of the UE as previously discussed with reference to FIGS. 1 to 7. Also, depending on the result of packet deciphering at the eNB, the control unit 930 may control a connection status between the UE and the eNB.

According to various embodiments of the present disclosure, an improved communication method for handling packet loss in the mobile communication network may be provided.

Additionally, various embodiments of the present disclosure may provide a method and apparatus for preventing a call disconnection in case of a bulk packet loss and thereby maintaining a seamless call.

Further, various embodiments of the present disclosure may provide a method for detecting a bulk packet loss, a method for detecting an IP packet form after deciphering, and a method for detecting a damaged packet without any loss.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method of a base station for handling a call in case of packet loss in a mobile communication network, the method comprising:
receiving an uplink packet from a user equipment, UE (135);
deciphering the packet based on a first hyper frame number, HFN;
changing an HFN value from the first HFN to a second HFN when a failure of the deciphering based on the first HFN occurs;
further deciphering the packet based on the second HFN; and
when the deciphering failure occurs, determining whether there is a history of deciphering the packet with the changed HFN, and if the packet has previously been deciphered using the changed HFN, discarding the packet when a failure of the deciphering based on the second HFN occurs.

2. The method of claim 1, wherein if the first HFN is n, the second HFN is n+1.

3. The method of claim 1, further comprising:
checking a header of the deciphered packet; and
if the deciphered packet fails to have the form of an Internet protocol, IP, packet, determining that the deciphering failure occurs.

4. The method of claim 1, further comprising:
when the deciphering failure occurs, determining whether there is a history of deciphering with the changed HFN for the packet; and
if there is the history of deciphering with the changed HFN, discarding the packet.

5. The method of claim 4, wherein the changing of the HFN value from the first HFN to the second HFN is performed when there is no history of deciphering the packet with the changed HFN.

6. The method of claim 1, further comprising:
defining an HFN change trigger condition,
wherein the changing of the HFN value from the first HFN to the second HFN is performed when the number of the deciphering failures with regard to the same HFN satisfies the HFN change trigger condition.

7. The method of claim 1, wherein the packet is a packet associated with Internet protocol, IP-based voice traffic in a radio link control unacknowledged mode, RLC UM.

8. The method of claim 1, wherein the changing of the HFN value from the first HFN to the second HFN is performed when a packet loss that exceeds a window range corresponding to a packet data convergence protocol sequence number, PDCP SN, of the packet is detected.

9. An apparatus of a base station for handling a call in case of packet loss in a mobile communication network, the apparatus comprising:
a transceiver unit (810; 910) configured to perform a communication with at least one network node; and
a packet processing controller (831) configured to:
receive an uplink packet from a user equipment, UE (135), through the transceiver unit (810; 910),
decipher the packet based on a first hyper frame number, HFN,
change an HFN value from the first HFN to a second HFN in case of a failure of the deciphering based on the first HFN,
further decipher the packet based on the second HFN, and
when the deciphering failure occurs, determining whether there is a history of deciphering the packet with the changed HFN, and if the packet has previously been deciphered using the changed HFN, discard the packet when a failure of the deciphering based on the second HFN occurs.

10. The apparatus of claim 9, wherein if the first HFN is n, the second HFN is n+1.

11. The apparatus of claim 9, wherein the packet processing controller (831) is further configured to:
check a header of the deciphered packet, and
if the deciphered packet fails to have the form of an Internet protocol, IP, packet, determine that the deciphering failure occurs.

12. The apparatus of claim 9, wherein the packet processing controller (831) is further configured to:
when the deciphering failure occurs, determine whether there is a history of deciphering with the changed HFN for the packet, and
if there is the history of deciphering with the changed HFN, discard the packet.

13. The apparatus of claim 12, wherein the packet processing controller (831) is further configured to change the HFN value from the first HFN to the second HFN when there is no history of deciphering with the changed HFN.

14. The apparatus of claim 9, wherein the packet processing controller (831) is further configured to:
define an HFN change trigger condition, and
change the HFN value from the first HFN to the second HFN when the number of the deciphering failures with regard to the same HFN satisfies the HFN change trigger condition.

15. The apparatus of claim 9, wherein the packet is a packet associated with Internet protocol, IP-based voice traffic in a radio link control unacknowledged mode, RLC UM, and
wherein the packet processing controller (831) is further configured to change the HFN value from the first HFN to the second HFN when a packet loss that exceeds a window range corresponding to a packet data convergence protocol sequence number, PDCP SN, of the packet is detected.

## Patentansprüche

1. Verfahren einer Basisstation zur Handhabung eines Anrufs im Falle eines Paketverlusts in einem Mobilkommunikationsnetzwerk, wobei das Verfahren Folgendes umfasst:
Empfangen eines Uplink-Pakets von einem Benutzergerät, UE (135);
Entschlüsseln des Pakets basierend auf einer ersten Hyperrahmennummer, HFN;
Ändern eines HFN-Werts von der ersten HFN zu einer zweiten HFN, wenn ein Fehler der Entschlüsselung auf der Grundlage der ersten HFN auftritt;
weiteres Entschlüsseln des Pakets basierend auf der zweiten HFN; und
wenn der Entschlüsselungsfehler auftritt, Bestimmen, ob eine Geschichte der Entschlüsselung des Pakets mit dem geänderten HFN vorliegt, und wenn das Paket zuvor unter Verwendung der geänderten HFN entschlüsselt wurde, Verwerfen des Pakets, wenn ein Fehler bei der Entschlüsselung auf der Grundlage der zweiten HFN auftritt.

2. Verfahren nach Anspruch 1, wobei, wenn die erste HFN n ist, die zweite HFN n+1 ist.

3. Verfahren nach Anspruch 1, ferner umfassend:
Überprüfen eines Headers des entschlüsselten Pakets; und
wenn das entschlüsselte Paket nicht die Form eines Internetprotokoll(IP)-Pakets hat, wird festgestellt, dass der Entschlüsselungsfehler auftritt.

4. Verfahren nach Anspruch 1, ferner umfassend:
wenn der Entschlüsselungsfehler auftritt, Bestimmen, ob eine Chronik der Entschlüsselung mit der geänderten HFN für das Paket vorliegt; und
wenn die Chronik der Entschlüsselung mit der geänderten HFN vorliegt, wird das Paket verworfen.

5. Verfahren nach Anspruch 4, wobei das Ändern des HFN-Werts von der ersten HFN zu der zweiten HFN durchgeführt wird, wenn keine Chronik zum Entschlüsseln des Pakets mit der geänderten HFN vorliegt.

6. Verfahren nach Anspruch 1, ferner umfassend:
Definieren einer HFN-Änderungsauslösebedingung,
wobei das Ändern des HFN-Werts von der ersten HFN zu der zweiten HFN durchgeführt wird, wenn die Anzahl der Entschlüsselungsfehler in Bezug auf dieselbe HFN die HFN-Änderungsauslösebedingung erfüllt.

7. Verfahren nach Anspruch 1, wobei das Paket ein Paket ist, das mit IP-basiertem Internetprotokoll-Sprachverkehr in einem unbestätigten Funkverbindungssteuermodus, RLC UM, assoziiert ist.

8. Verfahren nach Anspruch 1, wobei das Ändern des HFN-Werts von dem ersten HFN zu dem zweiten HFN durchgeführt wird, wenn ein Paketverlust, der einen Fensterbereich überschreitet, der einer Paketdaten-Konvergenzprotokoll-Sequenznummer, PDCP SN, des Pakets entspricht, erkannt wird.

9. Vorrichtung einer Basisstation zur Handhabung eines Anrufs im Falle eines Paketverlusts in einem Mobilkommunikationsnetzwerk, wobei die Vorrichtung Folgendes umfasst:
eine Transceivereinheit (810; 910), die konfiguriert ist, um eine Kommunikation mit mindestens einem Netzwerkknoten durchzuführen; und
eine Paketverarbeitungssteuerung (831), die konfiguriert ist zum:
Empfangen eines Uplink-Pakets von einem Benutzergerät, UE, (135) durch die Transceivereinheit (810; 910),
Entschlüsseln des Pakets basierend auf einer ersten Hyperrahmennummer, HFN, Ändern eines HFN-Werts von der ersten HFN zu einer zweiten HFN im Falle eines Fehlers der Entschlüsselung basierend auf der ersten HFN,
weiteres Entschlüsseln des Pakets basierend auf der zweiten HFN, und beim Auftreten des Entschlüsselungsfehlers, Bestimmen, ob eine Chronik zum Entschlüsseln des Pakets mit der geänderten HFN vorliegt und wenn das Paket zuvor unter Verwendung der geänderten HFN entschlüsselt wurde, Verwerfen des Pakets, wenn ein Fehler bei der Entschlüsselung auf der Grundlage des zweiten HFN auftritt.

10. Vorrichtung nach Anspruch 9, wobei, wenn die erste HFN n ist, die zweite HFN n+1 ist.

11. Vorrichtung nach Anspruch 9, wobei die Paketverarbeitungssteuerung (831) ferner konfiguriert ist zum:
Überprüfen eines Headers des entschlüsselten Pakets und
wenn das entschlüsselte Paket nicht die Form eines Internetprotokoll(IP)-Pakets hat, wird festgestellt, dass der Entschlüsselungsfehler auftritt.

12. Vorrichtung nach Anspruch 9, wobei die Paketverarbeitungssteuerung (831) ferner konfiguriert ist zum:
wenn der Entschlüsselungsfehler auftritt, Bestimmen, ob eine Chronik der Entschlüsselung mit der geänderten HFN für das Paket vorliegt; und
wenn die Chronik der Entschlüsselung mit der geänderten HFN vorliegt, wird das Paket verworfen.

13. Vorrichtung nach Anspruch 12, wobei die Paketverarbeitungssteuerung (831) ferner konfiguriert ist, um den HFN-Wert von der ersten HFN zu der zweiten HFN zu ändern, wenn keine Chronik der Entschlüsselung mit der geänderten HFN vorliegt.

14. Vorrichtung nach Anspruch 9, wobei die Paketverarbeitungssteuerung (831) ferner konfiguriert ist zum:
Definieren einer HFN-Änderungsauslösebedingung und
Ändern des HFN-Werts von der ersten HFN zu der zweiten HFN, wenn die Anzahl der Entschlüsselungsfehler in Bezug auf dieselbe HFN die HFN-ÄnderungsAuslösebedingung erfüllt.

15. Vorrichtung nach Anspruch 9, wobei das Paket ein Paket, das dem IP-basierten Internetprotokoll-Sprachverkehr in einem unbestätigten Funkverbindungssteuerungsmodus, RLC UM, zugeordnet ist, und
wobei die Paketverarbeitungssteuerung (831) ferner konfiguriert ist, um den HFN-Wert von der ersten HFN zu der zweiten HFN zu ändern, wenn ein Paketverlust, der einen Fensterbereich überschreitet, der einer Paketdaten-Konvergenzprotokoll-Sequenznummer (PDCP SN) des Pakets entspricht, erkannt wird.

## Revendications

1. Procédé d'une station de base pour traiter un appel en cas de perte de paquet dans un réseau de communication mobile, le procédé comprenant :
la réception d'un paquet de liaison montante à partir d'un équipement d'utilisateur, UE (135) ;
le déchiffrage du paquet sur la base d'un premier numéro d'hypertrame, HFN ;
la modification d'une valeur de HFN du premier HFN à un deuxième HFN lorsqu'une défaillance du déchiffrage sur la base du premier HFN se produit ;
le déchiffrage additionnel du paquet sur la base du deuxième HFN ; et
lorsque la défaillance de déchiffrage se produit, la détermination de s'il y a un historique de déchiffrage du paquet avec le HFN modifié, et si le paquet a été déchiffré précédemment en utilisant le HFN modifié, rejeter le paquet lorsqu'une défaillance du déchiffrage sur la base du deuxième HFN se produit.

2. Procédé selon la revendication 1, où si le premier HFN est n, le deuxième HFN est n+1.

3. Procédé selon la revendication 1, comprenant en outre :
vérifier un en-tête du paquet déchiffré ; et
si le paquet déchiffré ne parvient pas à avoir la forme d'un paquet de protocole Internet, IP, déterminer que la défaillance de déchiffrage se produit.

4. Procédé selon la revendication 1, comprenant en outre :
lorsque la défaillance de déchiffrage se produit, déterminer s'il y a un historique de déchiffrage avec le HFN modifié pour le paquet ; et
s'il y a l'historique de déchiffrage avec le HFN modifié, rejeter le paquet.

5. Procédé selon la revendication 4, où la modification de la valeur du HFN du premier HFN au deuxième HFN est accomplie lorsqu'il n'y a pas d'historique de déchiffrage du paquet avec le HFN modifié.

6. Procédé selon la revendication 1, comprenant en outre :
la définition d'une condition de déclenchement de modification de HFN,
où la modification de la valeur du HFN du premier HFN au deuxième HFN est accomplie lorsque le numéro des défaillances de déchiffrage par rapport au même HFN remplit la condition de déclenchement de modification de HFN.

7. Procédé selon la revendication 1, où le paquet est un paquet associé à un trafic vocal basé sur un protocole Internet, IP, dans un mode de contrôle de liaison radio sans accusé de réception, RLC UM.

8. Procédé selon la revendication 1, où la modification de la valeur du HFN du premier HFN au deuxième HFN est accomplie lorsqu'une perte de paquet qui excède une plage de fenêtre correspondant à un numéro de séquence de protocole de convergence de données par paquets, PDCP SN, du paquet est détectée.

9. Dispositif d'une station de base pour traiter un appel en cas de perte de paquet dans un réseau de communication mobile, le dispositif comprenant :
une unité d'émetteur-récepteur (810; 910) configurée pour effectuer une communication avec au moins un nœud de réseau ; et
un contrôleur de traitement de paquet (831) configuré pour :
recevoir un paquet de liaison montante à partir d'un équipement d'utilisateur, UE (135), à travers l'unité d'émetteur-récepteur (810 ; 910),
déchiffrer le paquet sur la base d'un premier numéro d'hypertrame, HFN,
modifier une valeur de HFN du premier HFN au deuxième HFN en cas d'une défaillance de déchiffrage sur la base du premier HFN,
déchiffrer additionnellement le paquet sur la base du deuxième HFN, et
lorsque la défaillance de déchiffrage se produit, déterminer s'il y a un historique de déchiffrage du paquet avec le HFN modifié, et si le paquet a été déchiffré précédemment en utilisant le HFN modifié, rejeter le paquet lorsqu'une défaillance de déchiffrage sur la base du deuxième HFN se produit.

10. Dispositif selon la revendication 9, où si le premier HFN est n, le deuxième HFN est n+1.

11. Dispositif selon la revendication 9, où le contrôleur de traitement de paquet (831) est configuré en outre pour :
vérifier un en-tête du paquet déchiffré, et
si le paquet déchiffré ne parvient pas à avoir la forme d'un paquet de protocole Internet, IP, déterminer que la défaillance de déchiffrage se produit.

12. Dispositif selon la revendication 9, où le contrôleur de traitement de paquet (831) est configuré en outre pour :
lorsque la défaillance de déchiffrage se produit, déterminer s'il y a un historique de déchiffrage avec le HFN modifié pour le paquet, et
s'il y a l'historique de déchiffrage avec le HFN modifié, rejeter le paquet.

13. Dispositif selon la revendication 12, où le contrôleur de traitement de paquet (831) est configuré en outre pour modifier la valeur de HFN du premier HFN au deuxième HFN lorsqu'il n'y a pas d'historique de déchiffrage avec le HFN modifié.

14. Dispositif selon la revendication 9, où le contrôleur de traitement de paquet (831) est configuré en outre pour :
définir une condition de déclenchement de modification du HFN, et
modifier la valeur de HFN du premier HFN au deuxième HFN lorsque le numéro des défaillances de déchiffrage par rapport au même HFN remplit la condition de déclenchement de modification de HFN.

15. Dispositif selon la revendication 9, où le paquet est un paquet associé à un trafic vocal basé sur un protocole Internet, IP, dans un mode de contrôle de liaison radio sans accusé de réception, RLC UM, et
où le contrôleur de traitement de paquet (831) est configuré en outre pour modifier la valeur de HFN du premier HFN au deuxième HFN lorsqu'une perte de paquet qui excède une plage de fenêtre correspondant à un numéro de séquence de protocole de convergence de données par paquets, PDCP SN, du paquet est détectée.
